# EUROPÄISCHE PATENTSCHRIFT

(11) **EP 1 338 071 B1**
(45) Veröffentlichungstag und Bekanntmachung des Hinweises auf die Patenterteilung: **13.06.2018**
(21) Anmeldenummer: 01982394.7
(22) Anmeldetag: 04.10.2001
(51) Int. Cl.: H02J 5/00

(54) **VERFAHREN UND VORRICHTUNG ZUR BERÜHRUNGSLOSEN ENERGIEÜBERTRAGUNG**
METHOD AND DEVICE FOR NON-CONTACT ENERGY TRANSMISSION
DISPOSITIF ET PROCEDE DE TRANSMISSION D'ENERGIE SANS CONTACT

(30) Priorität: 27.10.2000 DE 10053373
(43) Veröffentlichungstag der Anmeldung: 27.08.2003
(73) Patentinhaber: SEW-EURODRIVE GmbH & Co. KG, 76646 Bruchsal (DE)
(72) Erfinder: UHL, Thomas, 76646 Bruchsal (DE)
(86) Internationale Anmeldenummer: PCT/EP2001/011446
(87) Internationale Veröffentlichungsnummer: WO 2002/035676

(56) Entgegenhaltungen:
- EP-A- 0 818 868
- WO-A-99/08359
- DE-C- 19 735 624
- US-A- 5 831 841
- US-A- 6 081 437

## Beschreibung

Die Erfindung betrifft ein Verfahren und eine Vorrichtung zur berührungslosen Energieübertragung.

Aus der DE 197 35 624 C1 ist ein Verfahren bekannt zur berührungslosen Energieübertragung elektrischer Leistung aus einer Mittelfrequenzstromquelle mit einer Mittelfrequenz f_{M} auf einen oder mehrere bewegte Verbraucher über eine Übertragungsstrecke und aus den bewegten Verbrauchern zugeordneten Übertragerköpfen mit nachgeschaltetem Anpasssteller zum Einstellen der von der Übertragungsstrecke aufgenommenen Leistung, wobei die Übertragungsstrecke von der Mittelfrequenzstromquelle mit einem während der Leistungsübertragung in seinem Effektivwert konstanten Mittelfrequenzstrom gespeist wird.

Der Anpasssteller wandelt den aus dem Übertragerkopf eingeprägten mittelfrequenten Strom in eine Gleichspannung. Wie in den Figuren 3, 7a und 7b und zugehöriger Beschreibung der DE 197 35 624 C1 beschrieben, wird der Schalter T_{S} synchron zum Verlauf und mit der doppelten Frequenz des Eingangsstroms des Anpassstellers betrieben. Ein erheblicher Nachteil ist jedoch, dass diese hohe Schaltfrequenz 2 f_{M} hohe Schaltverluste zur Folge hat. Ein weiterer Nachteil ist, dass sich das synchrone Prinzip nicht mehr aufrecht erhalten lässt bei Verwendung mehrerer asynchron arbeitender Einspeisungen zur Versorgung eines Anpassstellers.

**Aus der** EP 0 818 868 A3 **ist ein induktives Leistungsverteilungssystem bekannt.** Dies Dokument zeigt ein Verfahren zur berührungslosen Energieübertragung wobei ein Verbraucher von einem Anpasssteller mit einer Einspeisung mit Energie versorgt wird, wobei der eingespeiste Strom in einem Gleichrichter gleichgerichtet, mit einer Zwischenkreisdrossel geglättet und zusammengeführt wird. Der Zwischenkreisstrom wird, je nach Leistungsbedarf, mittels eines Schalters entweder einem puffernden Zwischenkreiskondensator zugeführt oder vor diesem abgeleitet. Das Schalten des Schalter wird asynchron zur mittelfrequenten Einspeisung ausgeführt. **Aus der** WO 99/08359 A **ist ein Verfahren zur induktiven Energieübertragung bekannt.**

Der Erfindung liegt daher die Aufgabe zugrunde, ein Verfahren und eine Vorrichtung zur berührungslosen Energieübertragung weiterzubilden, wobei eine niedrige Schaltfrequenz des Schalters und die Verwendung asynchron arbeitender Einspeisungen zur Versorgung eines Anpassstellers ausführbar sein sollen.

Erfindungsgemäß wird die Aufgabe bei dem Verfahren zur berührungslosen Energieübertragung nach den in Anspruch 1 angegebenen Merkmalen und bei einer Vorrichtung zur Verwendung bei einem solchen Verfahren nach den in Anspruch 3 angegebenen Merkmalen gelöst.

Wesentliche Merkmale der Erfindung bei dem Verfahren zur berührungslosen Energieübertragung sind, dass aus einer oder mehreren Mittelfrequenzstromquellen, deren Frequenzen kleine Abweichungen um die Mittelfrequenz f_{M} aufweisen können, auf mindestens einen bewegten Verbraucher über eine oder mehrere Übertragungsstrecken und den Verbrauchern zugeordneten Übertragerköpfen mit nachgeschaltetem Anpasssteller zum Einstellen der von der Übertragungsstrecke aufgenommenen Leistung, wobei eine Übertragungsstrecke von einer Mittelfrequenzstromquelle mit einem während der Leistungsübertragung in seinem Effektivwert konstanten Mittelfrequenzstrom gespeist wird, wobei der jeweilige Verbraucher von mindestens einem Anpasssteller mit mehreren Einspeisungen mit Energie versorgt wird, wobei mehrere eingespeiste Ströme in jeweils einem Gleichrichter gleichgerichtet, mit jeweils einer Zwischenkreisdrossel geglättet und zusammengeführt werden, wobei je nach Leistungsbedarf der Verbraucher der jeweils zusammengeführte Zwischenkreisstrom mittels eines Schalters entweder einem die Ausgangsspannung U= des Anpassstellers puffernden Zwischenkreiskondensator zugeführt oder vor diesem abgeleitet wird, und wobei der jeweilige Schalter derart geschaltet wird, dass die Schaltfrequenz 1/T kleiner ist als die zweifache Mittelfrequenz, also1/T< 2f_{M}.

Von Vorteil ist dabei, dass die Schaltverluste geringer sind als bei Verfahren, die eine Schaltfrequenz von 2f_{M} voraussetzen und dass nicht nur synchron, sondern auch mehrere asynchron arbeitende Einspeisungen zur Versorgung eines Anpassstellers einsetzbar sind. Außerdem ist der Stromfluss mittels eines einzigen Schalters steuerbar. Erfindungsgemäss wird die Schaltfrequenz 1/T als Wert zwischen 0,5 f_{M} und 1,5 f_{M} gewählt. Von Vorteil ist dabei, dass bei möglichst geringen Schaltverlusten eine Zwischenkreisdrossel mit möglichst kleiner Baugröße einsetzbar ist. Erfindungsgemäss wird das Schalten des Schalters periodisch mit einer Frequenz 1/T und asynchron zu einer oder mehreren mittelfrequenten Einspeisungen derart ausgeführt, dass kein konstanter Phasenbezug zu den Strömen einer oder mehrerer Einspeisungen vorhanden ist. Von Vorteil ist dabei, dass das Verfahren robust ausführbar ist und Mittel zur Synchronisation einsparbar sind. Erfindungsgemäss wird die Zwischenkreisdrossel derart ausgelegt, dass der Zwischenkreisstrom im Betrieb nicht lückt. Von Vorteil ist dabei, dass trotz der obengenannten niedrigen Schaltfrequenz ein kontinuierlicher Leistungsfluss gewährleistet ist.

Bei einer vorteilhaften erfindungsgemäßen Ausführungsform weisen die Frequenzen der mittelfrequenten Einspeisungen Abweichungen um f_{M} auf. Von Vorteil ist dabei, dass die Einspeisungen nicht zueinander synchronisiert werden müssen.

Wesentliche Merkmale der Erfindung bei der Vorrichtung sind, dass die Mittel zur Ansteuerung des jeweiligen Schalters keine Mittel zur Synchronisation auf die mittelfrequenten Einspeisungen umfassen. Von Vorteil ist dabei, dass die Ansteuerung einfach, kostengünstig und insbesondere robust gegen Störeinflüsse bei asynchron arbeitenden Einspeisungen ist.

Bei einer vorteilhaften erfindungsgemäßen Ausführungsform umfassen die Mittel zur Ansteuerung des jeweiligen Schalters einen Modulator mit zeitlich linear verlaufenden An- und Abstiegsflanken, wobei der Betrag der Steigung der An- und Abstiegsflanken unterschiedlich wählbar ist. Von Vorteil ist dabei, dass insbesondere ein einfach und kostengünstig zu generierendes sägezahnförmiges Modulatorsignal verwendbar ist. Erfindungsgemäss weist ein Anpasssteller mehrere Einspeisungen auf, die jeweils einen Gleichrichter speisen, deren Ausgangsströme jeweils über eine Zwischenkreisdrossel zusammengeführt werden und dass ein Schalter derart nachgeschaltet ist, dass der Zwischenkreisstrom je nach Leistungsbedarf des an dem Anpasssteller angeschlossenen Verbrauchers entweder einem die Ausgangsspannung U= des Anpassstellers puffernden Zwischenkreiskondensator zugeführt oder vor diesem Zwischenkreiskondensator abgeleitet wird. Von Vorteil ist dabei, dass nicht nur synchron, sondern auch asynchron arbeitenden Einspeisungen einsetzbar sind.

Bei einer vorteilhaften erfindungsgemäßen Ausführungsform werden die Ausgangsspannungen zweier oder mehrerer Anpasssteller über Dioden parallelgeschaltet zur Versorgung eines Verbrauchers. Von Vorteil ist dabei, dass die zur Verfügung stellbare Leistung beliebig erhöhbar ist.

Die Erfindung wird nun anhand von Abbildungen näher erläutert:
Figur 1 zeigt ein beispielhaftes Prinzipschaltbild zur berührungslosen Energieübertragung mit einem Anpasssteller 6.
Figur 2 zeigt ein beispielhaftes Prinzipschaltbild des Anpassstellers mit einer Einspeisung 21.
Figur 3 zeigt für ein Ausführungsbeispiel ein Prinzipschaltbild der Regelung und Ansteuerung des Anpassstellers.
Figur 4 zeigt ein erfindungsgemäßes Prinzipschaltbild eines weiteren Anpassstellers mit zwei Einspeisungen (21, 31).
Figur 5 zeigt für ein erfindungsgemäßes Ausführungsbeispiel ein Prinzipschaltbild mit zwei Anpassstellern, deren Ausgänge über Dioden parallelgeschaltet sind.

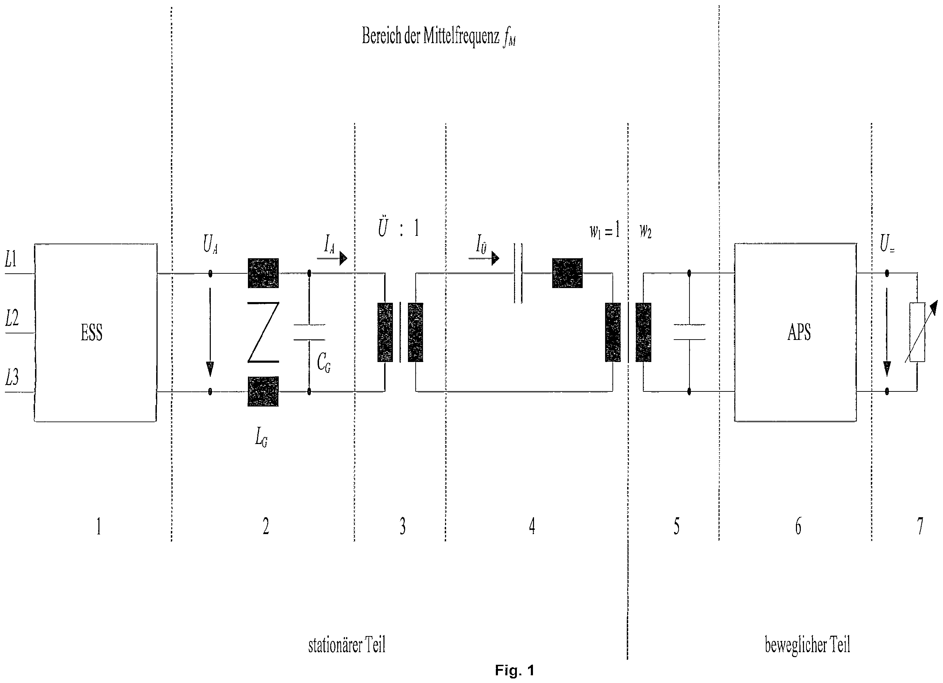

Figur 1 zeigt ein erstes beispielhaftes Prinzipschaltbild zur berührungslosen Energieübertragung mit einem Anpasssteller 6. Es umfasst einen stationären und einen beweglichen Teil.

Der stationäre Teil umfasst einen Einspeisesteller 1, einen Gyrator 2, einen Anpasstransformator 3 und eine Übertragungsstrecke 4.

Der Einspeisesteller 1 wandelt die aus dem Drehstromnetz (L1,L2,L3) aufgenommene niederfrequente Wechselspannung in eine mittelfrequente Spannung U_{A} mit konstanter Mittelfrequenz f_{M}, die beispielhaft 25kHz beträgt. Ein dem Einspeisesteller 1 nachgeschalteter, resonant betriebener Reihenschwingkreis, der sogenannte Gyrator 2, stellt eine spannungsgesteuerte Stromquelle I_{A} dar. Die Gyrator-Kapazität C_{G} und die Gyrator-Induktivität L_{G} werden entsprechend der Mittelfrequenz f_{M} und der Nennleistung des Einspeisestellers 1 ausgelegt.

Die Stromquelle I_{A} speist einen Anpasstransformator 3, dessen Übersetzungsverhältnis Ü derart ausgelegt ist, dass in der Übertragungsstrecke 4 ein in seinem Effektivwert konstanter Mittelfrequenzstrom I_{Ü} fließt, unabhängig von der Nennleistung des Einspeisestellers 1.

Der bewegliche Teil umfasst einen Übertragerkopf 5 mit Kompensationskondensator, einen Anpasssteller 6 und einen Verbraucher 7. Die Übertragungsstrecke 4 weist einen langgestreckten Leiter auf, an den Spulenwicklungen des Übertragerkopfes 5 derart induktiv gekoppelt sind, dass eine Energieübertragung an das bewegliche Teil stattfindet. Dabei weist der Übertragerkopf 5 eine Windungszahl w₂ auf, wodurch die Stromstärke einer Einspeisung am Anpasssteller 6 bestimmt ist.

Der Anpasssteller 6 wandelt den aus dem Übertragerkopf 5 eingeprägten mittelfrequenten Strom in eine Gleichspannung U=. Diese Spannung wird in einem Ausführungsbeispiel zur Speisung eines herkömmlichen Frequenzumrichters als Verbraucher 7 verwendet, um einen drehzahlverstellbaren Antrieb auf dem beweglichen Teil zu realisieren.

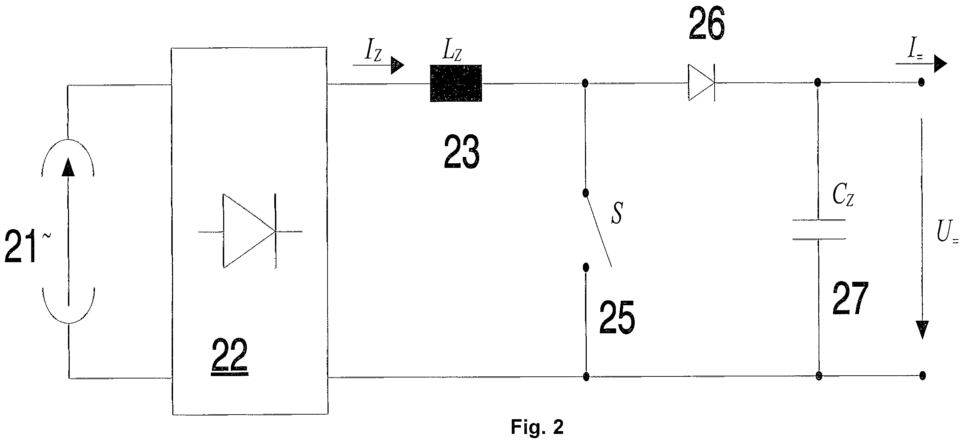

Der von der Übertragungsstrecke 4 auf den Übertragerkopf 5 übertragene Strom stellt eine Einspeisung 21 dar. Dieser Strom wird entsprechend der Figur 2 in einem Gleichrichter 22 des Anpassstellers 6 gleichgerichtet, mit einer Zwischenkreisdrossel 23 geglättet und je nach Leistungsbedarf des an dem Anpasssteller 6 angeschlossenen Verbrauchers 7 mittels eines Schalters 25 entweder dem die Ausgangsspannung U= des Anpassstellers 6 puffernden Zwischenkreiskondensator 27 zugeführt oder vor diesem Zwischenkreiskondensator 27 abgeleitet.

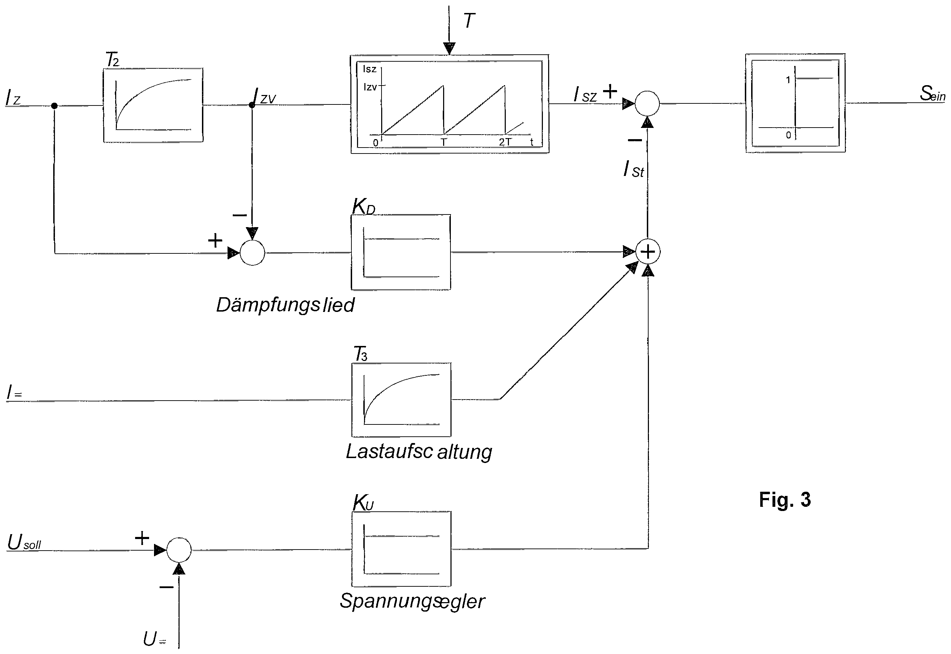

Figur 3 zeigt für ein Ausführungsbeispiel ein Prinzipschaltbild der Regelung und Ansteuerung des Schalters 25 des Anpassstellers. Dabei sind nichtlineare Glieder doppelt und lineare Glieder einfach umrahmt.

Der lineare Teil umfasst die Komponenten P-Spannungsregler der Verstärkung K_{U,} Lastaufschaltung mit einer Verzögerungszeitkonstanten T₃ und Dämpfungsglied, umfassend Verzögerungsglied mit Zeitkonstante T₂ und Proportionalglied der Verstärkung K_{D}.

Der nichtlineare Teil umfasst einen Modulator und ein Zweipunktglied, das ein Einschaltsignal Sₑᵢₙ für den Schalter 25 generiert. Die Eingangsgröße des Zweipunktglieds wird aus der Differenz eines sägezahnförmigen Modulatorsignals I_{SZ} und einem Steuersignal I_{St} gebildet. Die Amplitude des sägezahnförmigen Modulatorsignals ist bestimmt durch das geglättete Signal I_{ZV} des Zwischenkreisstromes. Die Frequenz 1/T des Modulatorsignals wird asynchron zur Frequenz f_{M} der Einspeisung 21 vorgegeben.

Das Steuersignal I_{St} besteht aus der Summe der Ausgangssignale des P-Spannungsreglers, der Lastaufschaltung und des Dämpfungsglieds.

Das Ausgangssignal des P-Spannungsreglers ergibt sich durch die mittels eines Proportionalglieds gewichtete Differenz zwischen Sollspannung Uₛₒₗₗ und Ausgangsspannung U₌ des Anpassstellers.

Zur Bildung des Ausgangssignals der Lastaufschaltung wird der Ausgangsstrom I₌ des Anpassstellers einem Verzögerungsglied mit Verzögerungszeit T₃ zugeleitet.

Das Ausgangssignal des Dämpfungsglieds ergibt sich durch die mittels eines Proportionalglieds gewichtete Differenz von Zwischenkreisstrom I_{Z} und geglättetem Signal I_{ZV} des Zwischenkreisstromes. Die Verstärkung des Proportionalglieds beträgt K_{D}.

Dabei gewährleistet die Regelung und Ansteuerung folgende vorteilhafte Funktionen:
Der Spannungsregler ist als einfacher P-Regler ausgeführt, da die Lastaufschaltung vorsteuernd das Einschaltsignal Sₑᵢₙ des Schalters 25 vorgibt, wodurch der Spannungsregler weitgehend entlastet ist.

Das Dämpfungsglied bedämpft Eigenschwingungen des Zwischenkreisstromes I_{Z} in der aus induktivem Übertragerkopf 5 mit Kompensationskondensator, Gleichrichter 22 und Zwischkenkreisdrossel 23 bestehenden schwingungsfähigen Anordnung.

In anderen erfindungsgemäßen Ausführungsbeispielen wird statt des sägezahnförmigen Modulatorsignals I_{SZ} ein periodisches Modulatorsignal mit zeitlich linear verlaufenden An- und Abstiegsflanken verwendet, wobei der Betrag der Steigung der An- und Abstiegsflanken unterschiedlich wählbar ist. Bei gleichem Betrag der Steigung der beiden Flanken ergibt sich ein dreieckförmiger Verlauf.

Im Gegensatz zur DE 197 35 624 C1 ist also nicht nur ein solches dreieckförmiges Modulatorsignal verwendbar, sondern insbesondere das in dem erfindungsgemäßen Ausführungsbeispiel eingesetzte, einfach zu generierende, sägezahnförmige Modulatorsignal.

Bei den erfindungsgemäßen Ausführungsbeispielen werden Amplitude und Periodendauer T jeweils wie beim beschriebenen sägezahnförmigen Modulatorsignal gewählt. Dabei wird die Periodendauer T als fester Wert aus einem 10%-breiten Toleranzband um 1/f_{M} herum gewählt.
Somit ist das Schalten des Schalters 25 asynchron zum Verlauf des Stromes der Einspeisung 21. Es liegt kein fester Phasenbezug vor.

Die Schaltverluste des elektronisch ausgeführten Schalters 25 sind im Wesentlichen umgekehrt proportional zur Schaltfrequenz 1/T. Aufgrund der großen verwendeten Periodendauer T ergeben sich also stark reduzierte Schaltverluste.

Die Dimensionierung der Zwischenkreisdrossel ist bestimmt durch die Verwendung der großen Periodendauer T, dem asynchronen Betrieb und der Forderung, dass der Zwischenkreisstrom im Betrieb nicht lückt, um einen kontinuierlichen Leistungsfluss zu gewährleisten. Von Vorteil ist bei diesem 10%-breiten Toleranzband, dass bei möglichst geringen Schaltverlusten die Zwischenkreisdrossel eine möglichst kleine Baugröße aufweist.

Bei anderen erfindungsgemäßen Ausführungsbeispielen ist als Periodendauer T auch ein Wert aus einem 50%-breiten Toleranzband um 1/f_{M} verwendbar.

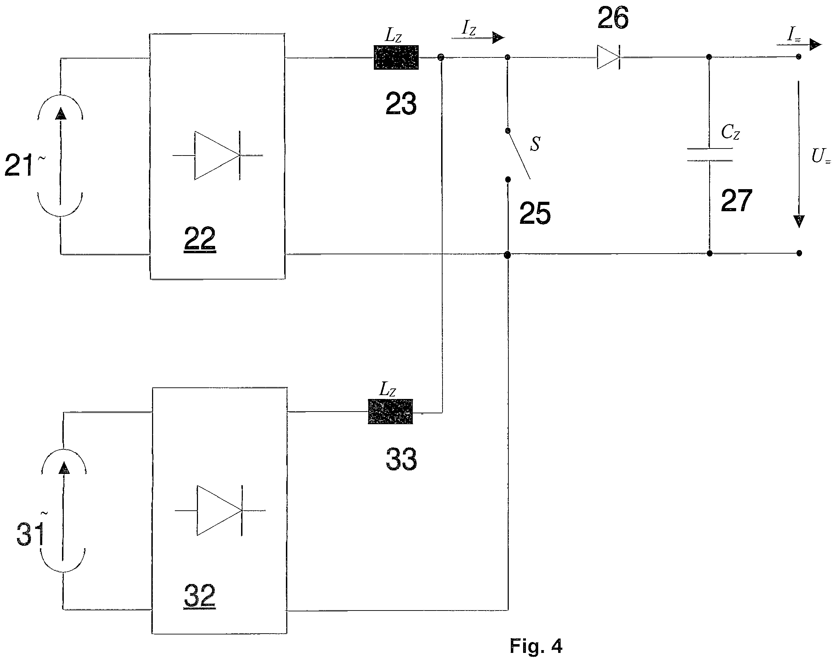

Figur 4 zeigt für ein anderes erfindungsgemäßes Ausführungsbeispiel eines Anpassstellers ein Prinzipschaltbild mit zwei Einspeisungen (21, 31). Dabei werden die eingespeisten Ströme jeweils in einem Gleichrichter (22, 32) gleichgerichtet, mit jeweils einer Zwischenkreisdrossel (23, 33) geglättet und zusammengeführt. Je nach Leistungsbedarf des an dem Anpasssteller angeschlossenen Verbrauchers wird der Zwischenkreisstrom I_{Z} mittels eines einzigen Schalters 25 entweder dem die Ausgangsspannung U= des Anpassstellers puffernden Zwischenkreiskondensator 27 zugeführt oder vor diesem Zwischenkreiskondensator 27 abgeleitet.

Auf diese Weise sind nicht nur zwei synchron arbeitende, sondern auch zwei asynchron arbeitende Einspeisungen zur Versorgung des Anpassstellers einsetzbar.

Die Übertragerköpfe entnehmen also bei einem ersten erfindungsgemäßen Ausführungsbeispiel Energie aus derselben Strecke. In diesem Fall arbeiten die Einspeisungen 21 und 31 synchron.

Die Übertragerköpfe entnehmen bei einem zweiten erfindungsgemäßen Ausführungsbeispiel Energie aus zwei verschiedenen Strecken. Dabei wird jede Strecke von einem Einspeisesteller 1 versorgt, wobei die Frequenzen der Mittelfrequenzstromquelle der jeweiligen Einspeisesteller 1 zumindest kleine Abweichungen aufweisen. Die Einspeisungen 21 und 31 arbeiten asynchron. Dieser Betrieb wird durch die Glättung des jeweiligen gleichgerichteten Stromes der entsprechenden Einspeisung (21, 31) mittels jeweils einer Zwischenkreisdrossel (23, 33) vor der Zusammenführung der Ströme ermöglicht.

In anderen erfindungsgemäßen Ausführungsbeispielen entnehmen die Übertragerköpfe Energie aus mehreren verschiedenen Strecken. Dabei wird wiederum jede Strecke von einem Einspeisesteller versorgt, wobei die Frequenzen der Mittelfrequenzstromquelle der jeweiligen Einspeisesteller wieder kleine Abweichungen aufweisen. Die Einspeisungen arbeiten asynchron. Dieser Betrieb wird wiederum nur durch die Glättung des jeweiligen gleichgerichteten Stromes der entsprechenden Einspeisung mittels jeweils einer Zwischenkreisdrossel vor der Zusammenführung der Ströme ermöglicht.

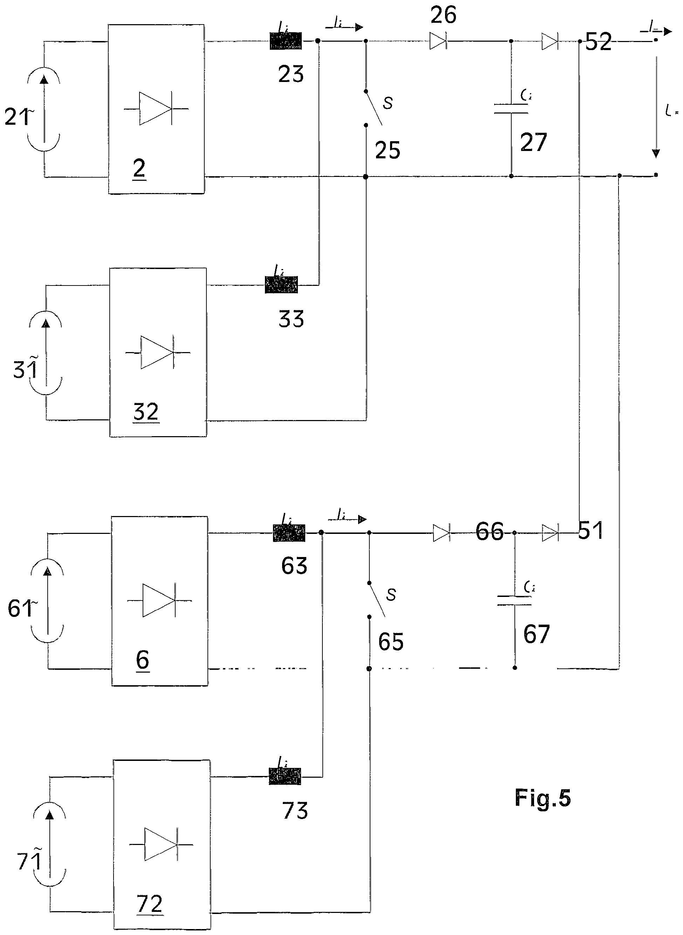

Figur 5 zeigt für ein anderes erfindungsgemäßes Ausführungsbeispiel ein Prinzipschaltbild mit zwei Anpassstellern, die verschiedene Einspeisungen (21, 31, 61, 71), Gleichrichter (22, 32, 62, 72), Zwischenkreisdrosseln (23, 33, 63, 73), und Dioden (26, 66) umfassen und deren Ausgänge über Dioden (51, 52) parallelgeschaltet sind. Je nach Leistungsbedarf des Verbrauchers wird der jeweilige Zwischenkreisstrom mittels der unabhängig voneinander arbeitenden Schalter (25, 65) entweder dem jeweiligen Zwischenkreiskondensator (27, 67) zugeführt oder vor diesem abgeleitet.

Die gezeigten und beschriebenen Schaltbilder und Regelungen sind nur als Prinzipschaltbilder zu verstehen. Dem Fachmann ist die Auslegung und Abänderung zur praktischen Realisierung der Erfindung geläufig.

***Bei anderen erfindungsgemäßen Ausführungsbeispielen weicht die Mittelfrequenz vom beispielhaft genannten Wert von 25 kHz ab. Auch Mittelfrequenzen im Bereich von 10 kHz bis 50 kHz sind technisch ausführbar.***

### Bezugszeichenliste

- 1: Einspeisesteller (ESS)
- 2: Gyrator
- 3: Anpasstransformator
- 4: Übertragungsstrecke
- 5: Übertragerkopf mit Kompensationskondensator
- 6: Anpasssteller (APS)
- 7: Verbraucher
- 21, 31, 61, 71: Einspeisung
- 22, 32, 62, 72: Gleichrichter
- 23, 33, 63, 73: Zwischenkreisdrossel
- 25, 65: Schalter
- 26, 66, 51, 52: Diode
- 27, 67: Zwischenkreiskondensator
- I₌: Ausgangsstrom des Anpassstellers
- I_{Z}: Zwischenkreisstrom
- I_{ZV}: geglättetes Signal des Zwischenkreisstromes
- I_{SZ}: sägezahnförmiges Modulatorsignal
- I_{ST}: Steuersignal
- I_{A}: Stromquelle, Ausgangsstrom des Gyrators
- I_{Ü}: Strom in der Übertragungsstrecke
- Uₛₒₗₗ: Sollspannung
- U₌: Ausgangsspannung des Anpassstellers
- U_{A}: Ausgangsspannung des Einspeisesteller
- C_{G}: Gyrator-Kapazität
- L_{G}: Gyrator-Induktivität
- Ü: Übersetzungsverhältnis des Anpasstransformators
- w₂: Windungszahl des Übertragerkopfes
- f_{M}: Mittelfrequenz
- K_{D}: Verstärkung des Dämpfungsglieds
- K_{U}: Verstärkung des Spannungsreglers
- T₂: Zeitkonstante des Dämpfungsglieds
- T₃: Verzögerungszeitkonstante der Lastaufschaltung
- Sₑᵢₙ: Einschaltsignal für Schalter

## Patentansprüche

1. Verfahren zur berührungslosen Energieübertragung elektrischer Leistung
aus einer oder **mehreren** Mittelfrequenzstromquellen, deren Frequenzen Abweichungen um die Mittelfrequenz f_{M} aufweisen können, auf mindestens einen bewegten Verbraucher (7) über eine oder **mehrere** Übertragungsstrecken (4) und den Verbrauchern zugeordneten Übertragerköpfen mit nachgeschaltetem Anpasssteller (6)
zum Einstellen der von der Übertragungsstrecke aufgenommenen Leistung,
wobei eine Übertragungsstrecke (4) von einer Mittelfrequenzstromquelle mit einem während der Leistungsübertragung in seinem Effektivwert konstanten Mittelfrequenzstrom gespeist wird,
wobei der jeweilige Verbraucher (7) von mindestens einem Anpasssteller (6) mit mindestens einer Einspeisung (21, 31, 61, 71) mit Energie versorgt wird, wobei ein oder mehrere eingespeiste Ströme in jeweils einem Gleichrichter (22, 32, 62, 72) gleichgerichtet, mit jeweils einer Zwischenkreisdrossel (23, 33, 63, 73) geglättet und zusammengeführt werden,
**wobei ein Anpasssteller (6) mehrere Einspeisungen (21, 31, 61, 71) aufweist, die jeweils einen Gleichrichter (22, 32, 62, 72) speisen, deren Ausgangsströme jeweils über eine Zwischenkreisdrossel (23, 33, 63, 73) zusammengeführt werden und dass ein Schalter (25, 65) derart nachgeschaltet ist, dass der Zwischenkreisstrom je nach Leistungsbedarf des an dem Anpasssteller (6) angeschlossenen Verbrauchers (7)** mittels des Schalters (25,65) **entweder einem die Ausgangsspannung U= des Anpassstellers (6) puffernden Zwischenkreiskondensator (27, 67) zugeführt oder vor diesem Zwischenkreiskondensator (27, 67) abgeleitet wird,**
**wobei das Schalten des Schalters (25, 65) asynchron zu einer oder mehreren mittelfrequenten Einspeisungen (21, 31, 61, 71) ausgeführt wird und/oder dass das Schalten des Schalters (25, 65) periodisch mit einer Frequenz 1/T derart durchgeführt wird, dass kein konstanter Phasenbezug zu den Strömen einer oder mehrerer Einspeisungen (21, 31, 61, 71) vorhanden ist,**
**wobei die Schaltfrequenz 1/T** des Schalters (25,65) **als Wert zwischen 0,5 f_{M} und 1,5 f_{M} gewählt wird, wobei die Zwischenkreisdrossel (23, 33, 63, 73) derart ausgelegt wird, dass der Zwischenkreisstrom im Betrieb nicht lückt.**

2. Verfahren Anspruch 1,
die Frequenzen der mittelfrequenten Einspeisungen (21, 31, 61, 71) Abweichungen um f_{M} aufweisen.

3. Vorrichtung zur Durchführung des Verfahrens nach mindestens einem der vorangegangenen Ansprüche,
wobei die Mittel zur Ansteuerung des jeweiligen Schalters (25, 65) keine Mittel zur Synchronisation auf die mittelfrequenten Einspeisungen (21, 31, 61, 71) umfassen,
so dass das Schalten des Schalters (25, 65) asynchron zu einer oder mehreren mittelfrequenten Einspeisungen (21, 31, 61, 71) ausgeführt wird und/oder dass das Schalten des Schalters (25, 65) periodisch mit einer Frequenz 1/T derart durchgeführt wird, dass kein konstanter Phasenbezug zu den Strömen einer oder mehrerer Einspeisungen (21, 31, 61, 71) vorhanden ist,
wobei die Schaltfrequenz 1/T als Wert zwischen 0,5 f_{M} und 1,5 f_{M} beträgt,
wobei die Zwischenkreisdrossel (23, 33, 63, 73) derart ausgelegt ist, dass der Zwischenkreisstrom im Betrieb nicht lückt,
wobei ein Anpasssteller (6) mehrere Einspeisungen (21, 31, 61, 71) aufweist, die jeweils einen Gleichrichter (22, 32, 62, 72) speisen, deren Ausgangsströme jeweils über eine Zwischenkreisdrossel (23, 33, 63, 73) zusammengeführt werden und dass ein Schalter (25, 65) derart nachgeschaltet ist, dass der Zwischenkreisstrom je nach Leistungsbedarf des an dem Anpasssteller (6) angeschlossenen Verbrauchers (7) entweder einem die Ausgangsspannung U= des Anpassstellers (6) puffernden Zwischenkreiskondensator (27, 67) zugeführt oder vor diesem Zwischenkreiskondensator (27, 67) abgeleitet wird.

4. Vorrichtung nach Anspruch 3,
**dadurch gekennzeichnet, dass**
die Mittel zur Ansteuerung des jeweiligen Schalters (25, 65) einen Modulator mit zeitlich linear verlaufenden An- und Abstiegsflanken umfassen, wobei der Betrag der Steigung der An- und Abstiegsflanken unterschiedlich wählbar ist.

5. Vorrichtung nach Anspruch 3 oder 4,
**dadurch gekennzeichnet, dass**
der Modulator ein Sägezahngenerator ist.

6. Vorrichtung nach Anspruch 3, 5 oder 4,
**dadurch gekennzeichnet, dass**
die Ausgangsspannungen zweier oder mehrerer Anpasssteller (6) über Dioden (26, 66, 51, 52) parallelgeschaltet werden zur Versorgung eines Verbrauchers (7).

## Claims

1. Method for contactless energy transfer of electric power from one or more medium-frequency current sources, the frequencies of which may exhibit deviations around the medium frequency f_{M}, to at least one moving consumer (7) via one or more transmission paths (4) and pick-ups assigned to the consumers, said pick-ups having a downstream mobile converter (6) for adjusting the power picked up from the transmission path,
wherein a transmission path (4) is fed with a medium-frequency current from a medium-frequency current source, said medium-frequency current being constant in its effective value during power transfer,
wherein the respective consumer (7) is supplied with energy from at least one mobile converter (6) having at least one feed-in (21, 31, 61, 71), one or more fed-in currents being rectified in a respective rectifier (22, 32, 62, 72), smoothed by a respective DC link choke (23, 33, 63, 73), and brought together,
wherein a mobile converter (6) has a plurality of feed-ins (21, 31, 61, 71) which each feed a rectifier (22, 32, 62, 72), the output currents of said rectifiers being respectively brought together via a DC link choke (23, 33, 63, 73), and in that a switch (25, 65) is arranged downstream such that, by means of the switch (25, 65), the DC link current is either supplied to a DC link capacitor (27, 67) which buffers the output voltage U₌ of the mobile converter (6) or is diverted upstream of said DC link capacitor (27, 67), depending on the power demand of the consumer (7) connected to the mobile converter (6),
wherein the switch (25, 65) is switched asynchronously with respect to one or more medium-frequency feed-ins (21, 31, 61, 71), and/or in that the switch (25, 65) is switched periodically at a frequency 1/T such that there is no constant phase relationship to the currents of one or more feed-ins (21, 31, 61, 71),
wherein the switching frequency 1/T of the switch (25, 65) is selected as a value between 0.5 f_{M} and 1.5 f_{M},
wherein the DC link choke (23, 33, 63, 73) is designed such that the DC link current does not pulsate during operation.

2. Method according to claim 1,
the frequencies of the medium-frequency feed-ins (21, 31, 61, 71) exhibit deviations around f_{M}.

3. Device for carrying out the method according to at least one of the preceding claims,
wherein the means for actuating the respective switch (25, 65) do not comprise means for synchronization to the medium-frequency feed-ins (21, 31, 61, 71),
so that the switch (25, 65) is switched asynchronously with respect to one or more medium-frequency feed-ins (21, 31, 61, 71), and/or so that the switch (25, 65) is switched periodically at a frequency 1/T such that there is no constant phase relationship to the currents of one or more feed-ins (21, 31, 61, 71),
wherein the switching frequency 1/T is a value between 0.5 f_{M} and 1.5 f_{M},
wherein the DC link choke (23, 33, 63, 73) is designed such that the DC link current does not pulsate during operation, wherein a mobile converter (6) has a plurality of feed-ins (21, 31, 61, 71) which each feed a rectifier (22, 32, 62, 72), the output currents of said rectifiers being respectively brought together via a DC link choke (23, 33, 63, 73), and in that a switch (25, 65) is arranged downstream such that the DC link current is either supplied to a DC link capacitor (27, 67) which buffers the output voltage U= of the mobile converter (6) or is diverted upstream of said DC link capacitor (27, 67), depending on the power demand of the consumer (7) connected to the mobile converter (6).

4. Device according to claim 3,
**characterized in that** the means for actuating the respective switch (25, 65) comprise a modulator which has rising and falling edges that run linearly over time, it being possible for the gradient of the rising and falling edges to be selected to be different.

5. Device according to claim 3 or 4,
**characterized in that**
the modulator is a sawtooth generator.

6. Device according to claim 3, 5 or 4,
**characterized in that**
the output voltages of two or more mobile converters (6) are connected in parallel via diodes (26, 66, 51, 52) in order to supply power to a consumer (7).

## Revendications

1. Procédé de transmission d'énergie électrique sans contact à partir d'une ou de plusieurs sources de courant à moyenne fréquence dont les fréquences peuvent présenter des écarts autour de la fréquence moyenne f_{M}, à au moins un consommateur mobile (7) via une ou plusieurs lignes de transmission (4) et des têtes de transmission associées aux consommateurs, avec un régulateur d'adaptation (6) monté en aval pour régler la puissance absorbée par la ligne de transmission,
une ligne de transmission (4) étant alimentée par une source de courant à moyenne fréquence en courant à moyenne fréquence de valeur efficace constante,
le consommateur (7) respectif étant alimenté en énergie par au moins un régulateur d'adaptation (6) présentant au moins une injection de courant (21, 31, 61, 71), un ou plusieurs courants injectés étant redressés dans un redresseur respectif (22, 32, 62, 72), lissés au moyen d'une self de circuit intermédiaire respective (23, 33, 63, 73) et réunis, un régulateur d'adaptation (6) présentant plusieurs injections de courant (21, 31, 61, 71) qui alimentent un redresseur respectif (22, 32, 62, 72) dont les courants de sortie sont réunis via une self de circuit intermédiaire respective (23, 33, 63, 73) et un commutateur (25, 65) étant monté en aval de telle sorte que le courant de circuit intermédiaire soit, au moyen du commutateur (25, 65), en fonction du besoin de puissance du consommateur (7) connecté au régulateur d'adaptation (6), soit amené à un condensateur de circuit intermédiaire (27, 67) servant de tampon à la tension de sortie U= du régulateur d'adaptation (6), soit prélevé de ce condensateur de circuit intermédiaire (27, 67),
la commutation du commutateur (25, 65) étant effectuée de manière asynchrone par rapport à une ou plusieurs injections de courant à moyenne fréquence (21, 31, 61, 71) et/ou la commutation du commutateur (25, 65) étant effectuée périodiquement à une fréquence 1/T de telle sorte qu'il n'y ait pas de référence de phase constante aux courants d'une ou plusieurs injections de courant (21, 31, 61, 71),
la fréquence de commutation 1/T du commutateur (25, 65) étant choisie comme ayant une valeur comprise entre 0,5 f_{M} et 1,5 f_{M},
la self de circuit intermédiaire (23, 33, 63, 73) étant dimensionnée de telle sorte que le courant de circuit intermédiaire ne soit pas discontinu en fonctionnement.

2. Procédé selon la revendication 1,
**caractérisé en ce que**
les fréquences des injections de courant à moyenne fréquence (21, 31, 61, 71) présentent des écarts autour de f_{M}.

3. Dispositif pour mettre en oeuvre le procédé selon au moins l'une des revendications précédentes,
dans lequel les moyens de commande du commutateur respectif (25, 65) ne comprennent pas de moyens de synchronisation sur les injections de courant à moyenne fréquence (21, 31, 61, 71),
de sorte que la commutation du commutateur (25, 65) est effectuée de manière asynchrone par rapport à une ou plusieurs injections de courant à moyenne fréquence (21, 31, 61, 71) et/ou que la commutation du commutateur (25, 65) est effectuée périodiquement à une fréquence 1/T de telle sorte qu'il n'y ait pas de référence de phase constante aux courants d'une ou plusieurs injections de courant (21, 31, 61, 71),
la fréquence de commutation 1/T ayant une valeur comprise entre 0,5 f_{M} et 1,5 f_{M},
la self de circuit intermédiaire (23, 33, 63, 73) étant dimensionnée de telle sorte que le courant de circuit intermédiaire ne soit pas discontinu en fonctionnement,
un régulateur d'adaptation (6) présentant plusieurs injections de courant (21, 31, 61, 71) qui alimentent un redresseur respectif (22, 32, 62, 72) dont les courants de sortie sont réunis via une self de circuit intermédiaire respective (23, 33, 63, 73) et un commutateur (25, 65) étant monté en aval de telle sorte que le courant de circuit intermédiaire soit, en fonction du besoin de puissance du consommateur (7) connecté au régulateur d'adaptation (6), soit amené à un condensateur de circuit intermédiaire (27, 67) servant de tampon à la tension de sortie U₌ du régulateur d'adaptation (6), soit prélevé de ce condensateur de circuit intermédiaire (27, 67).

4. Dispositif selon la revendication 3,
**caractérisé en ce que**
les moyens de commande du commutateur respectif (25, 65) comprennent un modulateur à flancs montants et descendants variant linéairement dans le temps, la valeur absolue de la pente des flancs montants et descendants pouvant être choisie différemment.

5. Dispositif selon l'une des revendications 3 ou 4,
**caractérisé en ce que**
le modulateur est un générateur de dents de scie.

6. Dispositif selon au moins l'une des revendications 3, 5 ou 4,
**caractérisé en ce que**
les tensions de sortie de deux ou plusieurs régulateurs d'adaptation (6) sont connectées en parallèle par l'intermédiaire de diodes (26, 66, 51, 52) pour l'alimentation d'un consommateur.
